# EUROPEAN PATENT APPLICATION

(11) **EP 2 305 619 A1**
(43) Date of publication of application: **06.04.2011**
(21) Application number: 10175028.9
(22) Date of filing: 02.09.2010
(51) Int. Cl.: C04B 14/12, C04B 20/10, C04B 30/00

(54) **Process for preparing decoration material, and material obtained by the process**

(30) Priority: 09.09.2009 IT VE20090046
(71) Applicant: Doro, Lisa, 36070 Trissino (IT)
(72) Inventor: Doro, Lisa, 36070 Trissino (IT)
(74) Representative: Piovesana, Paolo

(57) **Abstract**

A process for preparing decoration material, characterised by comprising the following operative steps in sequence:
- feeding expanded clay granules into a mixer having a temperature not exceeding 60°C,
- feeding an isocyanate into the mixer,
- feeding a colour into the mixer,
- spraying the granules with water after a time of 5-20 minutes,
- discharging the obtained product when the granules have become completely dry following the mixing.

## Description

The present invention relates to a process for preparing decoration material, and a material obtained by the process.

Expanded clay is a material used in the building industry as a light aggregate for forming light concrete, characterised by a porous inner core ensuring lightness, and a hard outer shell guaranteeing its mechanical strength.

It is obtained by firing clays of convenient chemical constitution and texture, in horizontal rotary kilns.

These kilns generally have a length from 20 to 60 m and a diameter from 1 to 3 m, with firing times of 30-60 minutes. The raw material is previously ground in mills to a particle size proportional to that to be obtained for the fired product. During the firing stage the raw clay, on encountering increasingly higher temperatures, undergoes a volume increase as a result of the development of Co₂ (because of the presence of CaCO₃) and H₂O (because of the presence of kaolin and similar silicates). The partial liquefaction and the rotary movement give rise to the formation of spheroids with small cells distributed uniformly within the granule. When extracted from the kiln, the incandescent material passes through a fluidized bed formed by air streams which, besides cooling the expanded clay, cause its oxidation and hence the clinkering of the outer shell. Expanded clay can also be obtained by roasting and sintering on a rotary grid; in this case the fired material is not round but irregular in shape.

In the urban gardening and furnishing sector, expanded clay is used as a drainage layer or, because of its hydrophilic characteristics, as a water reserve for plants and flowers. This product is applied in its actual configuration, i.e. as obtained from the production process, without further treatment.

An object of the present invention is to provide an expanded clay which maintains the traditional merits and characteristics of traditional expanded clay (thermal regulation, lightness, naturalness of the product), while at the same time presenting an important aesthetic and decorative effect.

Another object of the invention is to give the clay a greater abrasion resistance while providing the granules with aesthetic and decorative properties.

This object is attained according to the invention by a process for preparing decoration material as described in claim 1.

For the purposes of the present invention, the use of expanded clay granules of size 3-20 mm is particularly preferred.

In the material of the invention, coloration is achieved by using isocyanates with added colouring pastes or powders, or organic and/or inorganic pigments.

Isocyanates are organic products characterised by the -NCO functional group. The importance of isocyanates is due to their extreme reactivity with all compounds presenting an active hydrogen in their molecule, such as alcohols, amines, water, acids, etc. Their industrial preparation is based on the reaction of a primary amine with phosgene, whereas other preparation methods such as Hoffmann transposition or Curtius rearrangement have limited importance in small scale or laboratory preparation. There are many types of commercially available isocyanates: toluenediisocyanate (TDI), methanediphenyldiisocyanate (MDI), polymethylpolyphenylisocyanate (PMPPI), hexamethylenediisocyanate (TDI), naphthalenediisocyanate, phenylisocyanate, methylisocyanate etc. TDI and MDI are however the two most important. The present invention focuses on MDI, mainly because of its greater ease of utilization and handling, MDI being a noxious product but is non-toxic, as instead is TDI, moreover MDI has a decidedly lower vapour pressure than TDI.

Particularly preferred is the use of MDI prepolymers, i.e. isocyanates or isocyanate mixtures which are reacted with a deficiency of polyols or polyol mixtures in order to improve their characteristics, by exalting certain of their properties and making them more suitable for the required application. The present invention uses a prepolymer able to homogeneously wet the expanded clay during mixing and also able to provide high compatibility and miscibility with colouring pastes, powders or pigments. The isocyanate must however ensure a hardening (crosslinking) time such as to enable the product to be produced industrially in a suitable time. Moreover the coloured isocyanate layer which coats the granule surface must be compact, homogeneous, elastic, resistant and non-crumbling, these characteristics being possessed by the isocyanate prepolymer studied precisely for this application.

The material of the present invention therefore consists of expanded clay coated with a film of coloured isocyanate prepolymer. In this respect, coloration is generally achieved by using colouring pastes (consisting of an active part, the pigment, dispersed in a carrier) which are mixed with the isocyanate in a suitable ratio to obtain the required colouration and covering of the clay granule.

In an alternative embodiment, the isocyanate prepolymer is coloured by the direct use of powders or pigments which are mixed with the isocyanate.

A further aspect of the invention is a process for preparing the aforedescribed coloured granules.

The process comprises the initial step of loading the clay into a rotary mixer. This mixer is rotated at low r.p.m. Rotation is necessary to facilitate the mixing process between the clay and isocyanate, however this rotation must not create excessive attrition between the clay granules, in order to prevent their disintegration, with the formation of powder and a quality worsening of the coloration process and of the final product. In the meantime the mixture of isocyanate and colour (colouring paste or powder) is prepared separately. This preparation consists of a weighed dispensing of the two components followed by mixing with a suitable manual or automatic mixer. The ratio of isocyanate to colour depends on the type of colour and the pigment concentration of each colour. The suitable quantity of coloured isocyanate is then injected or sprayed into the mixer, with the mixing process lasting between about 10 and fifteen minutes. While maintaining the mixture in rotation, a mixture of catalyst and water is then injected or sprayed in, in order to complete the crosslinking reaction within a reasonable time. In this respect the isocyanate reacts with the water (by virtue of the -NCO reactive group) with the formation of ureas: this reaction takes place with a certain kinetics which can be accelerated by temperature-controlling the mixer at a certain temperature (up to 40-50°C). The crosslinking reaction can also be accelerated by using one or more catalysts dispersed (diluted) in the reaction water. The catalysts most frequently used are usually tertiary amines. Their catalysis mechanism is based on the donation of electrons by the tertiary nitrogen to the carbonyl carbon of the isocyanate, with consequent formation of an intermediate complex.

The catalytic activity of a tertiary amine depends on its structure and basicity. The catalytic effect increases as the basicity of the amine nitrogen increases, but decreases as the steric hindrance of the nitrogen increases. Either a single catalyst or a mixture of several catalysts can be used, depending on the type of catalytic effect desired. Moreover firstly water and then catalyst or vice versa could be injected instead of using the mixture of the two. After the clay granules coated with coloured isocyanate have been mixed with water and catalyst, the process proceeds for a further ten minutes to achieve a completely dry granule surface. At this point the coloured granules can be discharged from the mixer and packaged.

The step of injecting the isocyanate with the colour can also be carried out by injecting them separately (injecting firstly the colour and then the isocyanate or vice versa), i.e. without the two components being previously mixed; alternatively they can be added as an already previously prepared homogeneous mixture. Generally the second solution is preferred because it ensures a finished product of better quality, as the mixture is more homogeneous and localized colour and/or isocyanate excesses are avoided.

If the colorations do not cover sufficiently, successive colour layers can be applied either of the same colour or of different colours: for example if producing yellow coloured clay granules with a particularly light yellow tonality requirement, a white background must firstly be created on the generally dark clay granule, by using one or more granule coloration processes with white coloured isocyanate; followed by the yellow coloration process on an already white background.

The preparation process of the present invention is simple and economical to implement. In particular, costs are low both in terms of energy consumption (the operation is carried out at ambient temperature or with raw materials and mixer both currently temperature-controlled at 20-30°C), and in terms of costs of the materials used. In equipment terms the mixer costs are particularly low as the mixer requires no special auxiliary instrumentation.

Moreover the obtained product combines the traditional merits and characteristics of expanded clay (thermal regulation, lightness, naturalness of the product), with an important aesthetic and decorative effect which makes it particularly appreciated in the garden sector, in forming floral compositions and gardens and for urban furnishing works.

Additives (perfumed essences) can be added to the isocyanate and/or colour mixture to provide particular fragrances.

Furthermore any production waste can be recycled: in this respect rejected granules can undergo a further coloration process to again become finished product.

The following examples are provided for illustrative purposes and are not to be considered as limitative of the scope of protection defined by the claims.

### EXAMPLE 1

20 kg (40 litres) of red coloured expanded clay are produced (granule size 3-6 mm).

The clay, in the form of 3-6 mm granules, is loaded into the mixer which is at ambient temperature (about 20°C) and is moved (rotated) at a velocity of about 30 r.p.m. At the same time about 1400 g of isocyanate prepolymer and 1000 g of red colouring paste are weighed out. The isocyanate and paste are mixed by manual mixing and then poured into the main mixer. Mixing of the coloured isocyanate with the clay lasts for about 10 minutes. A mixture is then prepared consisting of 20 g of catalyst and 100 g of water. The water and catalyst mixture is sprayed into the mixer. After about 10 minutes of further mixing the granules are dry and are discharged.

### EXAMPLE 2

About 20 litres (10 kg) of yellow expanded clay are produced (granule size 8-20 mm).

Seeing the poor covering power of the yellow a light background has to be formed.

For this purpose a mixture consisting of 700 g isocyanate and 400 of white colouring paste are mixed with the 20 litres of clay (in the form of 8-20 mm granules). After about 10 minutes the catalyst and water mixture (10 g catalyst and about 80 g water) is sprayed in. After a further 10 minutes the granules are dry, and a second white coloration cycle is carried out by pouring in a further 700 g isocyanate and 400 g white. After a further 10 minutes of mixing, the water and catalyst mixture (in the same ratio as before) is again sprayed in. As soon as the granules are dry the yellow treatment is carried out by pouring in a further 700 g of isocyanate premixed with about 350 g of yellow. After about 10 minutes of mixing the product is again treated with the same catalyst and water mixture. The coloured granules are discharged after about a further 10 minutes.

## Claims

1. A process for preparing decoration material, **characterised by** comprising the following operative steps in sequence:
- feeding expanded clay granules into a mixer having a temperature not exceeding 60°C,
- feeding an isocyanate into the mixer,
- feeding a colour into the mixer,
- spraying the granules with water after a time of 5-20 minutes,
- discharging the obtained product when the granules have become completely dry following the mixing.

2. A process as claimed in claim 1, **characterised by** adding water together with a catalyst into the mixer.

3. A process as claimed in claim 1, **characterised in that** the isocyanate is pigmented with the colour before being fed into the mixer.

4. A process as claimed in claim 1, **characterised by** adding perfumed essences during the mixing.

5. A decoration material obtained by the process in accordance with one of claims from 1 to 4, **characterised by** consisting of loose granules of expanded clay covered with a film of coloured isocyanate prepolymer.

6. A material as claimed in claim 5, **characterised by** containing added perfumed essences.

7. A material as claimed in claim 5, **characterised in that** the particle size of the clay granules is between 3 and 20 mm.
